# EUROPEAN PATENT APPLICATION

(11) **EP 3 029 626 A1**
(43) Date of publication of application: **08.06.2016**
(21) Application number: 14831671.4
(22) Date of filing: 01.07.2014
(51) Int. Cl.: G06Q 50/10, G06F 21/10

(54) **LICENSE MANAGEMENT SYSTEM, DEVICE, AND METHOD, AND COMPUTER-READABLE MEDIUM**

(30) Priority: 30.07.2013 JP 2013157612
(71) Applicant: NEC Corporation, Tokyo 108-8001 (JP)
(72) Inventor: KAWADA, Koji, Tokyo 108-8001 (JP)
(74) Representative: Glawe, Delfs, Moll
(86) International application number: PCT/JP2014/003495
(87) International publication number: WO 2015/015710

(57) **Abstract**

An NE configuration information collecting unit (201) collects, from a network device (31), a usage status of each function serving as a license management target. A license billing calculation unit (102) generates billing information for the network device (31) in accordance with a comparison between a latest usage status of each function of the licensee device acquired by the NE configuration information collecting unit (201) and a usage status of each function of the licensee device previously acquired by the NE configuration information collecting unit (201). Thus, the present invention can provide a license management system, a license management apparatus, a license management method, and a program which are capable of performing license management while accurately comprehending changes in a license usage status of each device.

## Description

### Technical Field

The present invention relates to a license management system, a license management apparatus, a license management method, and a non-transitory computer readable medium.

### Background Art

As the recent information processing devices can implement various functions, sales/management forms of licenses for activating these functions have diversified. An example of a new license form is a form in which each information processing device is configured so that all functions can be implemented and a license fee is paid for the functions used therein. This license form enables a user to perform a flexible operation of the information processing device without regard to limitations of the functions thereof.

An example of a technique for software license management will be described below. Patent Literature 1 discloses a pay-as-you-go program licensing system capable of performing an accounting process rapidly and accurately on a program to be charged at a metered rate.

Patent Literature 2 discloses a license management system that facilitates software management by transmitting the number of times of use of a license of software used by a user to a software provider. Patent Literature 2 discloses that it is determined whether or not the number of clients who use the license of software is equal to or less than a predetermined threshold, and charging for the license, for example, is performed when the number of clients is equal to or more than the predetermined threshold (paragraph 0049, etc.).

### Citation List

### Patent Literature

[Patent Literature 1] Japanese Unexamined Patent Application Publication No. 2002-73191
[Patent Literature 2] Japanese Unexamined Patent Application Publication No. 2000-305775

### Summary of Invention

### Technical Problem

As described above, an operation is widely performed in which each information processing device is configured so that all functions can be implemented and a license fee is paid for the functions used in each device. In the case of such a license form, it is necessary for a seller to recognize the usage status of each function associated with the license of each device and to make a request for license billing according to changes in the usage status of each function. However, it is difficult to comprehend changes in the usage status of the functions of each device. This causes a problem that it is difficult to perform license management.

The technique disclosed in Patent Literature 1 is a technique dedicated to pay-as-you-go accounting, and does not perform license management depending on whether the functions of each device are used or not. Further, Patent Literature 2 discloses a technique that deals with a relationship between the number of contracted licenses and the number of licenses for a plurality of client devices. In this technique, license management according to changes in the usage status of the functions of each device is not taken into consideration.

The present invention has been made in view of the above-mentioned problems, and a principal object of the present invention is to provide a license management system, a license management apparatus, a license management method, and a program which are capable of performing license management while accurately comprehending changes in the license usage status of each device.

### Solution to Problem

A license management system according to an exemplary aspect of the present invention includes: a collection unit that acquires, from a licensee device, a usage status of each function serving as a license management target; and a license billing calculation unit that generates billing information for the licensee device in accordance with a comparison between a latest usage status of each function of the licensee device acquired by the collection unit and a usage status of each function of the licensee device previously acquired by the collection unit.

A license management apparatus according to an exemplary aspect of the present invention includes: a collection unit that acquires, from a licensee device, a usage status of each function serving as a license management target; and a license billing calculation unit that generates billing information for the licensee device in accordance with a comparison between a latest usage status of each function of the licensee device acquired by the collection unit and a usage status of each function of the licensee device previously acquired by the collection unit.

A license management method according to an exemplary aspect of the present invention includes: a collection step of acquiring, from a licensee device, a usage status of each function serving as a license management target; and a license billing calculation step of generating billing information for the licensee device in accordance with a comparison between a latest usage status of each function of the licensee device acquired in the collection step and a usage status of each function of the licensee device previously acquired in the collection step.

A program according to an exemplary aspect of the present invention causes a computer to execute: a reception step of receiving, from a licensee device, a usage status of each function serving as a license management target; and a license billing calculation step of generating billing information for the licensee device in accordance with a comparison between a latest usage status of each function of the licensee device acquired in the collection step and a usage status of each function of the licensee device previously acquired in the collection step.

### Advantageous Effects of Invention

The present invention can provide a license management system, a license management apparatus, a license management method, and a program which are capable of performing license management while accurately comprehending changes in a licensing state of each device.

### Brief Description of Drawings

Fig. 1 is a block diagram showing a configuration of a network system according to a first exemplary embodiment;
Fig. 2 is a block diagram showing detailed configurations of a license audit apparatus 10 and a license management apparatus 21 according to the first exemplary embodiment;
Fig. 3 is a table showing examples of data held by a configuration information storage unit 204 according to the first exemplary embodiment;
Fig. 4 is a table showing license information managed by an audit information storage unit 103 according to the first exemplary embodiment;
Fig. 5 is a diagram showing an example of billing information according to the first exemplary embodiment;
Fig. 6 is a flowchart showing an operation of each of the license audit apparatus 10 and the license management apparatus 21 according to a second exemplary embodiment;
Fig. 7 is a table showing license information managed by the audit information storage unit 103 according to the second exemplary embodiment;
Fig. 8 is a block diagram showing a configuration of a network system according to another exemplary embodiment; and
Fig. 9 is a block diagram showing a configuration of a network system according to the present invention.

### Description of Embodiments

### <First Exemplary Embodiment>

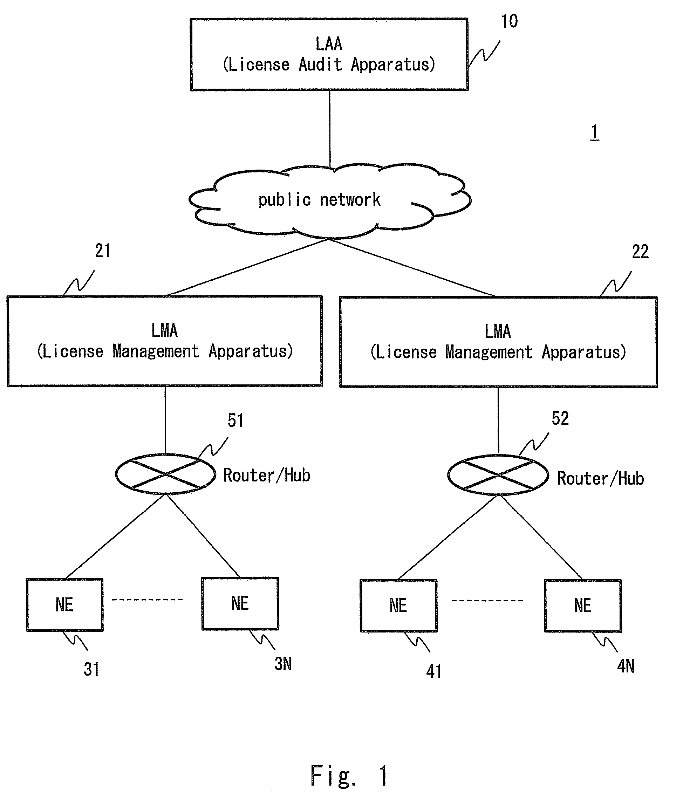

Exemplary embodiments of the present invention will be described below with reference to the drawings. Fig. 1 is a block diagram showing a configuration of a license management system according to this exemplary embodiment. A license management system 1 includes a license audit apparatus 10, license management apparatuses 21 and 22, network devices 31 to 3N (N is any integer equal to or greater than 2), network devices 41 to 4N (N is any integer equal to or greater than 2), and relay devices (router/hub) 51 and 52. The configuration shown in Fig. 1 is merely an example. Three or more license management apparatuses and three or more relay devices may be provided. Further, an arbitrary number of network devices may be connected to each license management apparatus.

The relay device 51 controls communication between the license management apparatus 21 and the network devices 31 to 3N, and transmits and receives packets. Similarly, the relay device 52 controls communication between the license management apparatus 22 and the network devices 41 to 4N, and transmits and receives packets.

The network devices 31 to 3N and 41 to 4N are, for example, devices each having a communication function. Examples of the network devices 31 to 3N and 41 to 4N include communication devices that connect base station devices to each other. Each of the network devices 31 to 3N and 41 to 4N is a device serving as a license management target (a so-called licensee device). A license form of each of the network devices 31 to 3N and 41 to 4N that is assumed in the license management system 1 according to this exemplary embodiment will be described below.

In principle, all implementable functions are implemented in each of the network devices 31 to 3N and 41 to 4N. In this configuration, the functions of the network devices 31 to 3N and 41 to 4N become available only when the functions are activated by, for example, software settings. The activation of each function can be set by a user of each of the network devices 31 to 3N and 41 to 4N. When each function is activated, the license audit apparatus 10, which is described later, recognizes the activated state and charges a fee for each device. Examples of the functions serving as the license management target in the network devices 31 to 3N and 41 to 4N include "Capacity", "Redundancy", "XPIC", and "Bitrate". Such a license form enables the user of each of the network devices 31 to 3N and 41 to 4N to perform a flexible operation without regard to which functions are available.

The network devices 31 to 3N and 41 to 4N are devices mainly owned by a carrier. On the other hand, the license management apparatuses 21 and 22 and the license audit apparatus 10 are devices owned by a vendor of the network devices. This vendor hands over the network devices 31 to 3N and 41 to 4N to the carrier in a state in which each function of the network devices can be activated through settings by the carrier. The vendor recognizes which functions are used in each network device by a mechanism to be described later, and charges a fee (preferably, accounting) for the functions. The carrier operates the network devices 31 to 3N and 41 to 4N in a state where the license for each network device is granted upon payment of a fee charged by the vendor. Note that such a relationship between the carrier and the vendor is a model case, and other operation forms may be adopted, as a matter of course.

The license form is not limited to the above-described form (in which the availability is controlled by software settings). Any license form can be adopted, as long as it is possible to recognize which functions are used in the network devices 31 to 3N and 41 to 4N and to perform the license management based on the usage status of each of the functions.

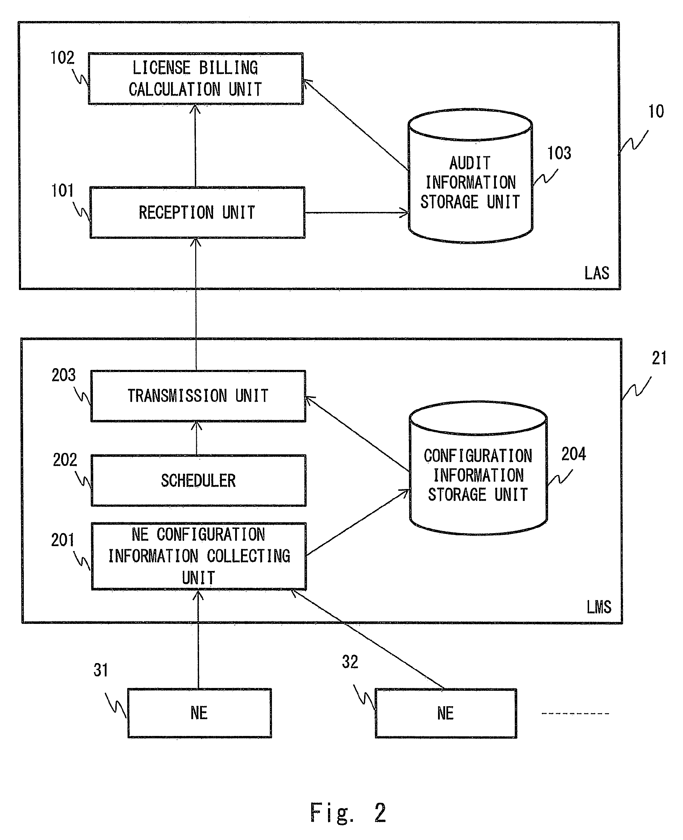

The license management apparatus 21 is connected to each of the network devices 31 to 3N via the relay device 51, and performs various managements including license management of the network devices 31 to 3N. The license management apparatus 21 periodically collects information as to whether the functions for the license management of the network devices 31 to 3N are activated or not, and periodically notifies the license audit apparatus 10 of the license usage status of each of the network devices 31 to 3B. The license management apparatus 21 may perform not only the processes associated with the license, but also processes such as collection and management of a communication status of each of the network devices 31 to 3N by RMON (Remote network MONitoring). The detailed configuration and operation of the license management apparatus 21 will be described with reference to Fig. 2.

The license management apparatus 22 is a device that manages the network devices 41 to 4N. Since the configuration and operation of the license management apparatus 22 are similar to those of the license management apparatus 21, the license management apparatus 21 will be mainly described below.

The license audit apparatus 10 connects the license management apparatuses 21 and 22 to each other via a network. The license audit apparatus 10 holds the history of the usage status of each function associated with the license management of the network devices 31 to 3N and 41 to 4N, and generates billing information for the network devices 31 to 3N and 41 to 4N by comparing the history of the usage status of each function with the latest usage status of each function. The billing information is, for example, information about billing, and indicates information about billing for an administrator. The details and operation of the license audit apparatus 10 will be described with reference to Fig. 2.

Fig. 2 is a block diagram showing the detailed configurations of the license audit apparatus 10 and the license management apparatus 21 according to this exemplary embodiment. The license audit apparatus 10 includes a reception unit 101, a license billing calculation unit 102, and an audit information storage unit 103. The license management apparatus 21 includes an NE configuration information collecting unit 201, a scheduler 202, a transmission unit 203, and a configuration information storage unit 204.

First, each processing unit of the license management apparatus 21 will be described. The NE configuration information collecting unit 201 acquires, from the network device 31, a usage status of each function (or information indicating whether each function serving as the license management target is used or not) associated with the license management. The NE configuration information collecting unit 201 may perform a polling process to acquire the usage status of each function from the network device 31, or may receive the usage status of each function transmitted from the network device 31. In the following description, assume that the NE configuration information collecting unit 201 performs the polling process. Similarly, the NE configuration information collecting unit 201 collects the usage status of each function from the network devices 32 to 3N.

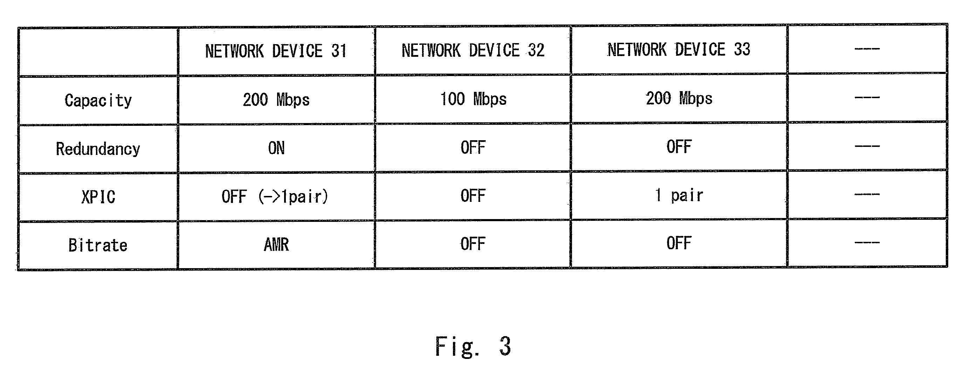

The NE configuration information collecting unit 201 may be provided for each network device (i.e., N number of NE configuration information collecting units may be provided). The license management apparatus 21 writes, into the configuration information storage unit 204, the acquired usage status of each function of the network devices 31 to 3N. This write process will be described with reference to Fig. 3.

Fig. 3 is a table showing data held by the configuration information storage unit 204. The configuration information storage unit 204 is preferably configured as a software database, and stores data in a table format. Note that the configuration information storage unit 204 may hold data in a file format (for example, a CSV (comma-separated values) format file).

The table shown in Fig. 3 holds data on function parameter names "Capacity", "Redundancy", "XPIC", and "Bitrate" of each network device. However, the table may hold data on other functions (for example "Modulation"). The NE configuration information collecting unit 201 reads out the data, which is currently held in the table, before the usage status of each function is written into the table. Further, the NE configuration information collecting unit 201 compares, for each function, the data acquired from the network device 31 with the data read out from the table. The NE configuration information collecting unit 201 overwrites the data in the table for only the function, the license fee for which has increased, among the functions in which a change in the setting occurs. The function, the license fee for which has increased, refers to an extended function. The function can be construed as, for example, a function for which an additional fee is charged.

For example, as for the function "Redundancy", the NE configuration information collecting unit 201 compares data "OFF" collected from the network device 31 with data "ON" read out from the table. In this case, as for the configuration of the function "Redundancy", the NE configuration information collecting unit 201 does not determine that the function has been extended, and thus does not overwrite the data on the function "Redundancy".

Further, as for the function "XPIC", the NE configuration information collecting unit 201 compares data "1 pair" collected from the network device 31 with data "OFF" read out from the table. In this case, as for the configuration of the function "XPIC", the NE configuration information collecting unit 201 determines that the function "XPIC" has been extended, and thus overwrites the data on the function "Capacity" with the data "1 pair".

As shown in Fig. 3, the configuration information storage unit 204 holds the configuration information about all the network devices (31 to 3N) to be managed. The NE configuration information collecting unit 201 writes the configuration information about the other network devices 32 to 3N into the configuration information storage unit 204 by a method similar to that described above.

Referring to Fig. 2 again, the scheduler 202 sends a notification to the transmission unit 203 at predetermined regular intervals. The regular intervals are intervals in which billing information related to the license of each of the network devices 31 to 3N is presented to the administrator or the like. The user of the license management apparatus 21 sets the length of the regular intervals by using an input device (for example, a mouse or a keyboard). The user sets this period in accordance with a license billing policy of the license management system 1. For example, the scheduler 202 sends a notification to the transmission unit 203 every three months (regular intervals = three months).

Upon receiving the notification from the scheduler 202, the transmission unit 203 reads out the configuration information about the network devices 31 to 3N from the configuration information storage unit 204. Further, the transmission unit 203 transmits, to the license audit apparatus 10, the read configuration information about the network devices 31 to 3N as the latest configuration information about the network devices.

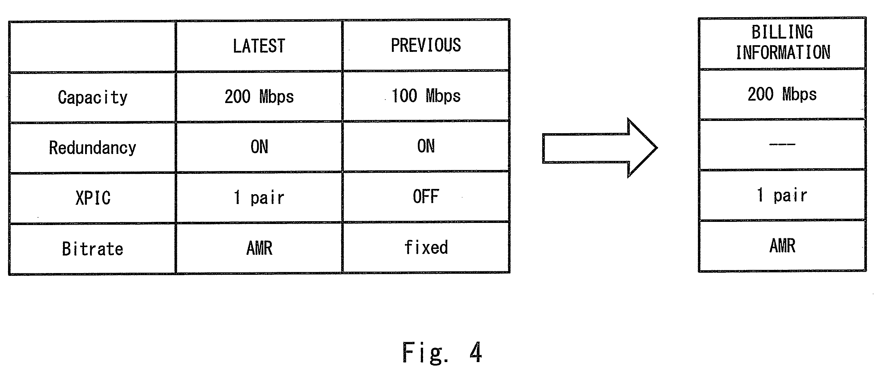

Next, the license audit apparatus 10 will be described. The reception unit 101 receives the configuration information (latest configuration information) about the network devices 31 to 3N that has been transmitted from (the transmission unit 203 in) the license management apparatus 21. Further, the reception unit 101 updates the audit information storage unit 103 by using the received configuration information. The configuration of the audit information storage unit 103 and the updating process by the reception unit 101 will be described with reference to Fig. 4.

Fig. 4 is a table showing information about each function serving as the license management target of the network device 31 managed by the audit information storage unit 103. This table is hereinafter referred to as a license history table. The license history table holds the latest value (first usage status) of each function and the previous value (second usage status) of each function. The previous value of each function is the value of each function that is used in a previous comparison. For example, in a case where the scheduler 202 sends a notification every three months, the license history table holds the latest value of each function, as well as the value of each function obtained three months ago. The configuration shown in Fig. 4 is merely an example. The history management table may hold, for example, all the values of each function collected so far (i.e., the history management table may have any configuration, as long as the value of each function during the previous write process can be grasped). The audit information storage unit 103 holds the license history table for each of the network devices 31 to 3N and 41 to 4N.

After receiving the information from the license management apparatus 21, the reception unit 101 copies the latest value of each function stored in the license history table to the previous value of each function, and writes the received value of each function as the latest value of each function. In other words, the reception unit 101 treats the configuration information received from the license management apparatus 21 as the latest value (first usage status) of each function. After the write process is completed, the reception unit 101 sends a notification to the license billing calculation unit 102.

After receiving the notification from the reception unit 101, the license billing calculation unit 102 starts a billing information calculation process on each of the network devices 31 to 3N and 41 to 4N. The license billing calculation unit 102 compares the previous value of each function with the latest value of each function by referring to the license history table for each of the network devices 31 to 3N and 41 to 4N. The license billing calculation unit 102 extracts the function in which a difference occurs as the comparison result. Further, the license billing calculation unit 102 charges a fee for the license of the function in which a difference occurs (i.e., determines that the function has been newly used and makes a claim for this (preferably, billing)).

For example, in Fig. 4, the license billing calculation unit 102 first reads out the data from the history table of the network device 31 within the audit information storage unit 103. Since a change in the upgrading of the function "Capacity", i.e., a change from "100 Mbps" to "200 Mbps", has occurred, the license billing calculation unit 102 determines to charge a license fee for "200 Mbps". Further, since no change has occurred in the function "Redundancy", the license billing calculation unit 102 determines not to charge a license fee. Furthermore, since a change in the upgrading of the function "XPIC", i.e., a change from "OFF" to "1 pair", has occurred, the license billing calculation unit 102 determines to charges a license fee for "1 pair". Similarly, since a change in the upgrading of the function "Bitrate", i.e., a change from "fixed" to "AMR", has occurred, the license billing calculation unit 102 determines to charges a license fee for "AMR".

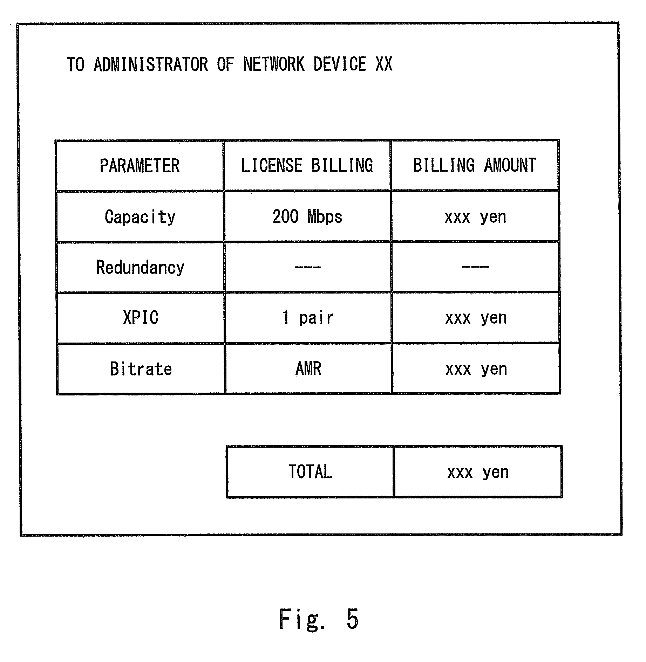

The license billing calculation unit 102 executes the above-described calculation process on each of the network devices 31 to 3N and 41 to 4N, and performs, for example, an adjustment of a display format for sending a notification to the administrator of each network device based on the billing information obtained by the calculation. For example, the license billing calculation unit 102 creates an interface screen for billing information as shown in Fig. 5, and presents the interface screen to the administrator of the target network device. The license billing calculation unit 102 refers, as necessary, to a billing amount table which is not shown (a table showing a relationship between functions and billing amounts) during the creation of the interface screen.

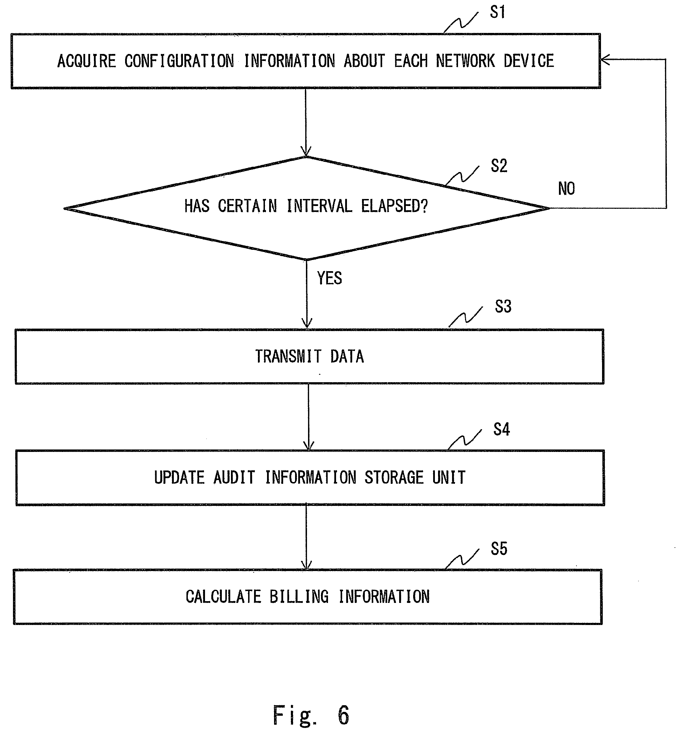

Referring next to Fig. 6, a flow of processing by the license management apparatus 21 and the license audit apparatus 10 will be described. Fig. 6 is a flowchart showing a flow of processing by the license management apparatus 21 and the license audit apparatus 10. A process for the network device 31 will be described below.

The NE configuration information collecting unit 201 within the license management apparatus 2 acquires, from the network device 31, the configuration information (usage status of each function serving as the license management target) by the polling process (or the reception process from the network device 31) (S1). The scheduler 202 determines whether a certain interval has elapsed (S2). When a certain interval has not elapsed (S2: No), the NE configuration information collecting unit 201 continues the polling process and updates the configuration information storage unit 204 (S1).

When a certain interval has elapsed (S2: Yes), the scheduler 202 sends a notification to the transmission unit 203. Upon receiving the notification, the transmission unit 203 reads out the configuration information about the network device 31 from the configuration information storage unit 204, and transmits the read configuration information to the reception unit 101 within the license audit apparatus 10 as the latest configuration information (S3).

The reception unit 101 within the license audit apparatus 10 receives the configuration information about the network device 31. Further, the reception unit 101 updates the audit information storage unit 103 by using the received configuration information about the network device 31 (S4). The reception unit 101 sends a notification to the license billing calculation unit 102 after updating. The license billing calculation unit 102 which has received the notification calculates billing information for the network device 31 by referring to the audit information storage unit 103 (S5).

Next, advantageous effects of the license management system 1 according to this exemplary embodiment will be described. The license management system 1 periodically collects the usage status of each function associated with the license from the network devices (licensee devices) 31 to 3N, and compares the collected usage status with the previously collected usage status, thereby appropriately comprehending changes in the usage status of each function of the network devices (licensee devices) 31 to 3N. By accurately comprehending changes in the usage status of each function, the license management system 1 can generate accurate billing information for the network devices (licensee devices) 31 to 3N.

Specifically, in this exemplary embodiment, the license billing calculation unit 102 treats the configuration information transmitted from the license management apparatus 21 as the latest usage status (first usage status), and calculates changes in the usage status of each function by comparing the latest usage status with the usage status (second usage status) of each function used in the previous comparison process. The transmission timing of the license management apparatus 21 can be changed by adjusting the notification timing of the scheduler 202 by the user. Thus, the billing information can be generated at an appropriate timing in accordance with the billing policy of the license management system 1.

### <Second Exemplary Embodiment>

Next, a license management system according to a second exemplary embodiment will be described. Unlike the first exemplary embodiment, the license management system 1 according to the second exemplary embodiment is characterized in that the configuration information storage unit 204 is constantly overwritten by the NE configuration information collecting unit 201. Differences between the license management system 1 according to the second exemplary embodiment and that of the first exemplary embodiment will be mainly described below.

The configurations of the license management apparatuses 21 and 22 and the license audit apparatus 10 according to this exemplary embodiment are the same as the configurations shown in Fig. 2. However, the operation of the NE configuration information collecting unit 201 and the configuration of the audit information storage unit 103 are different from those of the first exemplary embodiment. The different configuration and operation will be described below.

The NE configuration information collecting unit 201 performs a polling process to collect the usage status of each function associated with the license from the network device 31. The NE configuration information collecting unit 201 writes the collected usage status of each function directly into the configuration information storage unit 204. Specifically, all the data stored in the configuration information storage unit 204 are overwritten every time the polling process is performed by the NE configuration information collecting unit 201. The transmission unit 203 transmits, to the reception unit 101, the data stored in the configuration information storage unit 204 when the notification is received from the scheduler 202, as the latest usage status of each function of the network devices 31 to 3N and 41 to 4N.

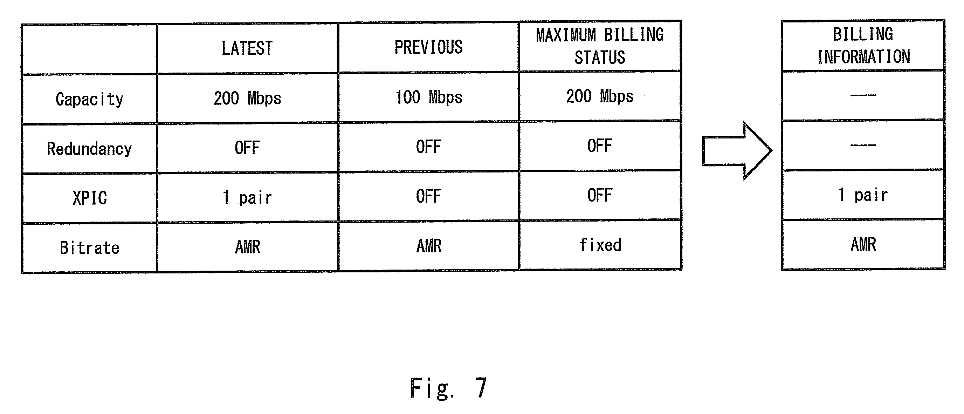

Referring next to Fig. 7, the configuration of the audit information storage unit 103 will be described. Fig. 7 shows a license history table managed by the audit information storage unit 103 according to this exemplary embodiment. The license history table according to this exemplary embodiment holds a maximum billing status (a status in which license billing is most frequently performed, for example, a status in which function updating is most frequently performed among the statuses in which a license fee has been paid).

The reception unit 101 performs a write process in accordance with the license management table. Specifically, as in the first exemplary embodiment, the reception unit 101 updates the value of each function received this time by the reception unit 101 (the latest value of each function) and the previous value of each function. The reception unit 101 sends a notification to the license billing calculation unit 102 at a timing when updating of the latest value of each function and the previous value of each function is completed.

After receiving the notification from the reception unit 101, the license billing calculation unit 102, which has received the notification, starts a billing information calculation process on each of the network devices 31 to 3N and 41 to 4N. The license billing calculation unit 102 according to this exemplary embodiment compares the latest value of each function with the maximum billing status by referring to the license history table of each of the network devices 31 to 3N and 41 to 4N. The license billing calculation unit 102 extracts the function in which a difference occurs as the comparison result. Further, the license billing calculation unit 102 charges a license fee (preferably, billing) for the upgraded functions.

For example, in Fig. 7, the license billing calculation unit 102 reads out the data from the license history table of the network device 31 within the audit information storage unit 103. Further, the license billing calculation unit 102 determines that no change has occurred in the upgrading of the function "Capacity", and thus determines not to charge a license fee. Thus, even when a change corresponding upgrading of a function from the previous status occurs, the license billing calculation unit 102 may determine not to charge a license fee in accordance with the comparison between the latest value of each function and the maximum billing status.

Since no change has occurred in the function "Redundancy", the license billing calculation unit 102 determines not to charge a license fee. Since a change in the upgrading of the function "XPIC", i.e., a change from "OFF" to "1 pair", has occurred, the license billing calculation unit 102 determines to charge a license fee for "1 pair". Similarly, since a change in the upgrading of the function "Bitrate", i.e., a change from "fixed" to "AMR", has occurred, the license billing calculation unit 102 determines to charge a license fee for "AMR".

The license history table shown in Fig. 7 also manages the previous value of each function. However, it is not necessary to hold the previous value of each function. In this exemplary embodiment, it is only necessary for the license history table to manage the latest value of each function and the maximum billing status.

Note that a flow of processing by the license management apparatus 21 and the license audit apparatus 10 is similar to that shown in Fig. 6 (the contents of the processing are different as described above). Accordingly, the description of the flow of processing according to this exemplary embodiment will be omitted.

Next, advantageous effects of the license management system 1 according to this exemplary embodiment will be described. As in the first exemplary embodiment, the license management system 1 periodically collects the usage status of each function associated with the license from the network devices (licensee devices) 31 to 3N, and compares the collected usage status with the previously collected usage status, thereby appropriately comprehending changes in the usage status of each function of the network devices (licensee devices) 31 to 3N. By accurately comprehending changes in the usage status of each function, the license management system 1 can generate accurate billing information for the network devices (licensee devices) 31 to 3N.

The license billing calculation unit 102 according to this exemplary embodiment treats the configuration information transmitted from the license management apparatus 21 as the latest usage status (first usage status). Further, the license billing calculation unit 102 stores the usage status (second usage status) of each of most-extended functions of the network devices (licensee devices) 31 to 3N, and compares the usage status (second usage status) with the latest usage status (first usage status). This avoids a situation where a license which has previously been purchased and has not been used for various reasons is used after a long time and a license fee (billing) for the license is charged again.

The NE configuration information collecting unit 201 constantly updates the configuration information storage unit 204. This avoids charging of a high license fee, even in the case of making an error in the setting, or in the case of operating the network devices 31 to 3N in a state where a license is temporarily assigned to the network devices.

The exemplary embodiments described above are merely examples of the application of the technical idea obtained by the present inventor. That is, the technical idea is not limited only to the above exemplary embodiments, but can be modified in various manners.

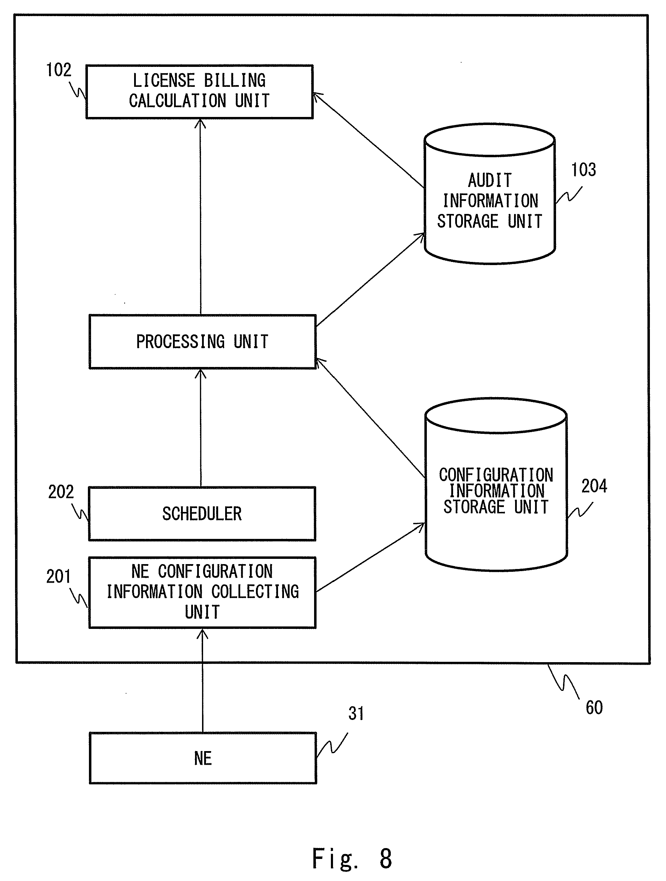

For example, in the configurations of the exemplary embodiments described above, the license management apparatus 21 and the license audit apparatus 10 are provided in the license management system 1. However, the configuration of the present invention is not limited to this. Specifically, it is possible to employ a configuration in which one device including the processing units (the NE configuration information collecting unit 201, the scheduler 202, the transmission unit 203, and the configuration information storage unit 204) within the license management apparatus 2 and the processing units (the reception unit 101, the license billing calculation unit 102, and the audit information storage unit 103) within the license audit apparatus 10 is provided in the license management system 1 (i.e., the configuration of a license management apparatus 60 shown in Fig. 8).

Note that the license audit apparatus 10, the license management apparatus 21, and the license management apparatus 22 may have a cluster configuration composed of a plurality of pieces of hardware.

The processes of the processing units (the NE configuration information collecting unit 201, the scheduler 202, and the transmission unit 203) within the license management apparatus 21 and the processes of the processing units (the reception unit 101 and the license billing calculation unit 102) within the license audit apparatus 10 can be implemented as a program to be run on any computer. In this case, the license management apparatus 21 and the license audit apparatus 10 are so-called computers (server devices), and implement the processes of the above-described processing units by executing the program.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a wireless communication line.

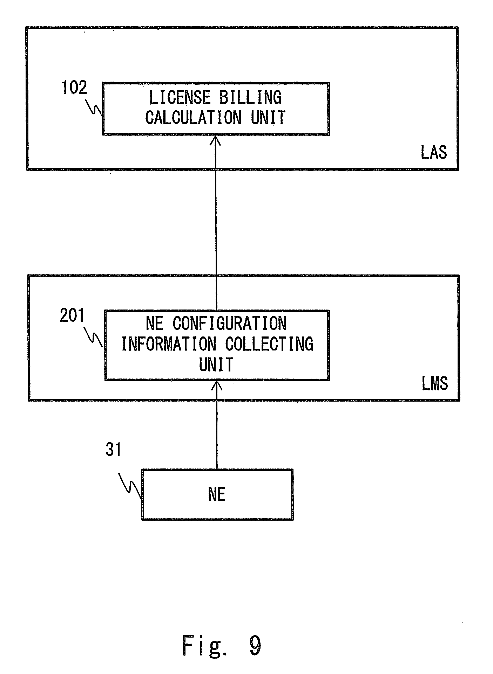

Lastly, the outline of the license management system according to the present invention will be described with reference to Fig. 9. Fig. 9 is a block diagram showing the main components of the license management system 1 according to the present invention.

In the network device 31 (licensee device), functions each serving as the license management target are implemented in a usable state. The NE configuration information collecting unit 201 acquires, from the network device 31, the usage status of each function serving as the license management target. The NE configuration information collecting unit 201 supplies the license billing calculation unit 102 with the collected information. Note that the NE configuration information collecting unit 201 may manage the configuration information by using the configuration information storage unit 204 as in the first exemplary embodiment and the like.

The license billing calculation unit 102 compares the latest usage status of each function acquired by the NE configuration information collecting unit 201 with the usage status of each function previously acquired by the NE configuration information collecting unit 201. In this case, the license billing calculation unit 102 manages the history of the usage status of each function by using, for example, the above-described audit information storage unit 103. The license billing calculation unit 102 generates billing information for the network device 31 according to the comparison result.

By accurately comprehending changes in the usage status of each function by the comparison process, the license management system 1 can generate accurate billing information for the network devices (licensee devices) 31 to 3N.

This application is based upon and claims the benefit of priority from Japanese patent application No. 2013-157612, filed on July 30, 2013, the disclosure of which is incorporated herein in its entirety by reference.

### Reference Signs List

1 LICENSE MANAGEMENT SYSTEM
10 LICENSE AUDIT APPARATUS
101 RECEPTION UNIT
102 LICENSE BILLING CALCULATION UNIT
103 AUDIT INFORMATION STORAGE UNIT
21, 22, 60 LICENSE MANAGEMENT APPARATUS
201 NE CONFIGURATION INFORMATION COLLECTING UNIT
202 SCHEDULER
203 TRANSMISSION UNIT
204 CONFIGURATION INFORMATION STORAGE UNIT
31 - 3N NETWORK DEVICE
41 - 4N NETWORK DEVICE
51, 52 RELAY DEVICE

## Claims

1. A license management system comprising:
collection means for acquiring, from a licensee device, a usage status of each function serving as a license management target; and
license billing calculation means for generating billing information for the licensee device in accordance with a comparison between a latest usage status of each function of the licensee device acquired by the collection means and a usage status of each function of the licensee device previously acquired by the collection means.

2. The license management system according to Claim 1,
wherein the license billing calculation means generates the billing information in accordance with a comparison between a first usage status and a second usage status, the first usage status being a latest usage status of each function of the licensee device acquired by the collection means, the second usage status being a usage status of each function of the licensee device acquired by the collection means and used in a previous comparison, the billing information indicating whether a fee for each function of the licensee device is to be charged or not.

3. The license management system according to Claim 1,
wherein the license billing calculation means generates the billing information in accordance with a comparison between a first usage status and a second usage status, the first usage status being a latest usage status of each function of the licensee device acquired by the collection means, the second usage status being a usage status of each of most-extended functions of the licensee device acquired by the collection means, the billing information indicating whether a fee for each function of the licensee device is to be charged or not.

4. The license management system according to any one of Claims 1 to 3, further comprising a scheduler that measures a predetermined interval,
wherein the license billing calculation means generates the billing information at a timing when the scheduler determines that the interval has elapsed.

5. The license management system according to Claim 2, further comprising:
a scheduler that measures a predetermined interval;
configuration information storage means for storing a usage status of each function of the licensee device acquired by the collection means; and
audit information storage means for storing a history of the usage status of each function of the licensee device acquired by the collection means, wherein
the collection means collects the usage status of each function of the licensee device, compares the collected usage status of each function with the usage status of each function of the licensee device stored in the configuration information storage means, and updates the configuration information storage means according to a result of the comparison,
after the scheduler determines that the interval has elapsed, the audit information storage means is updated with the usage status of each function of the licensee device stored in the configuration information storage means, and
after the scheduler determines that the interval has elapsed, the license billing calculation means generates the billing information by performing a comparison process assuming that information stored in the configuration information storage means is the first usage status and information stored in the audit information storage means is the second usage status.

6. The license management system according to Claim 3, further comprising:
a scheduler that measures a predetermined interval;
configuration information storage means for storing a usage status of each function of the licensee device acquired by the collection means; and
audit information storage means for storing a usage status of a most extended function among the usage statuses of functions of the licensee device acquired by the collection means,
the collection means updates the configuration information storage means by using information collected every time the usage status of each function of the licensee device is collected,
the audit information storage means is updated after the scheduler determines that the interval has elapsed, and
after the scheduler determines that the interval has elapsed, the license billing calculation means generates the billing information by performing a comparison process assuming that information stored in the configuration information storage means is the first usage status and information stored in the audit information storage means is the second usage status.

7. The license management system according to any one of Claims 1 to 6, wherein the license billing calculation means generates the billing information in a data format that associates charging information with a parameter name of each function of the licensee device.

8. The license management system according to any one of Claims 1 to 7, wherein
the license management system includes a license management apparatus and a license audit apparatus,
the license management apparatus includes the collection means, and
the license audit apparatus includes the license billing calculation means.

9. A license management apparatus comprising:
collection means for collecting, from a licensee device, a usage status of each function serving as a license management target; and
license billing calculation means for generating billing information for the licensee device in accordance with a comparison between a latest usage status of each function of the licensee device acquired by the collection means and a usage status of each function of the licensee device previously acquired by the collection means.

10. The license management apparatus according to Claim 9,
wherein the license billing calculation means generates the billing information in accordance with a comparison between a first usage status and a second usage status, the first usage status being a latest usage status of each function of the licensee device acquired by the collection means, the second usage status being a usage status of each function of the licensee device acquired by the collection means and used in a previous comparison, the billing information indicating whether a fee for each function of the licensee device is to be charged or not.

11. The license management apparatus according to Claim 9,
wherein the license billing calculation means generates the billing information in accordance with a comparison between a first usage status and a second usage status, the first usage status being a latest usage status of each function of the licensee device acquired by the collection means, the second usage status being a usage status of each of most-extended functions of the licensee device acquired by the collection means, the billing information indicating whether a fee for each function of the licensee device is to be charged or not.

12. The license management apparatus according to any one of Claims 9 to 11, further comprising a scheduler that measures a predetermined interval,
wherein the license billing calculation means generates the billing information at a timing when the scheduler determines that the interval has elapsed.

13. A license management method comprising:
acquiring, from a licensee device, a usage status of each function serving as a license management target; and
generating billing information for the licensee device in accordance with a comparison between an acquired latest usage status of each function of the licensee device and a previously acquired usage status of each function of the licensee device.

14. The license management method according to Claim 13,
wherein in the generation of the billing information, the billing information indicating whether a fee for each function of the licensee device is to be charged or not is generated in accordance with a comparison between a first usage status and a second usage status, the first usage status being an acquired latest usage status of each function of the licensee device, the second usage status being an acquired usage status of each function of the licensee device used in a previous comparison.

15. The license management method according to Claim 13,
wherein in the generation of the billing information, the billing information indicating whether a fee for each function of the licensee device is to be charged or not is generated in accordance with a comparison between a first usage status and a second usage status, the first usage status being an acquired latest usage status of each function of the licensee device, the second usage status being an acquired usage status of each of most-extended functions of the licensee device.

16. A non-transitory computer readable medium storing a program for causing a computer to execute processing including:
receiving, from a licensee device, a usage status of each function serving as a license management target; and
generating billing information for the licensee device in accordance with a comparison between a received latest usage status of each function of the licensee device and a previously received usage status of each function of the licensee device.
